# EUROPEAN PATENT SPECIFICATION

(11) **EP 3 584 460 B1**
(45) Date of publication and mention of the grant of the patent: **09.08.2023**
(21) Application number: 18880385.2
(22) Date of filing: 27.09.2018
(51) Int. Cl.: F16C 33/78, F16J 15/04, F16C 19/06

(54) **ROLLING BEARING AND MANUFACTURING METHOD FOR ROLLING BEARING**
WÄLZLAGER UND HERSTELLUNGSVERFAHREN FÜR WÄLZLAGER
PALIER À ROULEMENT ET PROCÉDÉ DE FABRICATION DE PALIER À ROULEMENT

(30) Priority: 22.11.2017 JP 2017224536
(43) Date of publication of application: 25.12.2019
(73) Proprietor: JTEKT PRECISION BEARING CORPORATION, Izumi-shi, Osaka 594-1157 (JP)
(72) Inventor: SASAKI, Hiroyuki, Izumi-shi Osaka 594-1157 (JP); KAWASAKA, Riku, Izumi-shi Osaka 594-1157 (JP); HASHIMOTO, Ryuichi, Izumi-shi Osaka 594-1157 (JP); YAMAMOTO, Koji, Izumi-shi Osaka 594-1157 (JP)
(74) Representative: De Clercq & Partners
(86) International application number: PCT/JP2018/036036
(87) International publication number: WO 2019/102712

(56) References cited:
- DE-A1-102011 053 483
- JP-A- H11 351 263
- JP-A- H11 351 263
- JP-A- 2004 092 668
- JP-A- 2004 092 668
- JP-A- 2008 051 304
- JP-A- 2008 051 304
- US-A- 5 560 715
- US-A- 5 560 715
- US-A1- 2004 120 079

## Description

### TECHNICAL FIELD

The present invention relates to a rolling bearing and a method of manufacturing the rolling bearing.

### BACKGROUND ART

Rolling bearings are widely used in various fields. A general rolling bearing includes an inner ring, an outer ring, a plurality of rolling elements, and a retainer that retains the rolling elements. Other known rolling bearing includes an annular shield for preventing entry of water or foreign objects from the outside of the bearing into the bearing-inside where the rolling elements are set, or preventing leakage of grease enclosed in the bearing-inside to the outside of the bearing (for example, see Patent Literature 1). The shield is attached to the side part of a stationary ring (the outer ring).

Conventionally, a circumferential groove is formed on the inner circumferential side of the side part of the outer ring for the shield to be attached. The shield is fitted into the circumferential groove by pressing. In order to surely fix the shield, the circumferential groove is preferably formed to be axially wider to some extent. However, with the rolling bearing whose axial dimension is reduced to be thinner, the space for the circumferential groove is limited. This makes it difficult to surely fix the shield to the outer ring.

### CITATION LIST

### [PATENT LITERATURE]

Patent Literature 1: Japanese Unexamined Patent Publication No. 2008-51304

US5560715 A describes the fixation of sealing means with pulse laser by welding spots.

### SUMMARY OF INVENTION

According to the present invention, there is provided a method of manufacturing a rolling bearing, and such a rolling bearing, as described in the independent attached claims.

A rolling bearing according to one embodiment of the present invention is a rolling bearing including: a stationary ring; a rotating ring; a plurality of rolling elements interposed between the stationary ring and the rotating ring; a retainer retaining the plurality of rolling elements; and a shield having an annular shape and attached to a side part of the stationary ring. A merged part obtained by welding with the stationary ring and a non-welded part not fixed to the stationary ring are circumferentially alternately provided at the shield.

A method of manufacturing a rolling bearing according to one embodiment of the present invention is a method of manufacturing a rolling bearing including a stationary ring, a rotating ring, a plurality of rolling elements interposed between the stationary ring and the rotating ring, and a retainer retaining the plurality of rolling elements, the method including attaching a shield having an annular shape to the stationary ring, the method including: a preparation step of overlaying part of the shield on a side part of the stationary ring; and a welding step of laser-welding the shield to the side part. In the welding step, while a head outputting the laser and the stationary ring on which the shield is overlaid are relatively rotated about a center axis of the stationary ring, a welding operation of outputting laser on the shield to weld and a non-welding operation of not outputting laser are alternately repetitively performed.

### BRIEF DESCRIPTION OF DRAWINGS

[FIG. 1] FIG. 1 is a cross-sectional view showing an exemplary rolling bearing.
[FIG. 2] FIG. 2 is a cross-sectional view showing an outer circumferential part of a shield on the axial one side and around the shield.
[FIG. 3] FIG. 3 is a side view of the rolling bearing shown in FIG. 1.
[FIG. 4A] FIG. 4A is an explanatory illustration showing the manner in a preparation step.
[FIG. 4B] FIG. 4B is an explanatory illustration showing the manner in the preparation step.
[FIG. 5] FIG. 5 is an explanatory illustration as seen on the center axis where the shield is pressed against the side part of the outer ring with a jig.
[FIG. 6A] FIG. 6A is an explanatory illustration of the state where the shield is pressed against the outer ring with a jig of other mode.
[FIG. 6B] FIG. 6B is a cross-sectional view taken along arrow B in FIG. 6A.
[FIG. 7] FIG. 7 is an explanatory illustration of a welding step.
[FIG. 8] FIG. 8 shows an exemplary specification of the rolling bearing according to the present embodiment and an exemplary welding condition in the welding step.
[FIG. 9A] FIG. 9A is a time chart describing a welding operation and a non-welding operation in the welding step.
[FIG. 9B] FIG. 9B is an explanatory illustration of the welding step.
[FIG. 10] FIG. 10 is a graph showing the relationship between the rate of a merged part and the strain on the outer ring.
[FIG. 11] FIG. 11 is a graph showing the relationship between the rate of the merged part and the fixing strength of the shield.
[FIG. 12] FIG. 12 is a side view of a rolling bearing of other mode.
[FIG. 13] FIG. 13 is a cross-sectional view showing a rolling bearing of another mode.
[FIG. 14] FIG. 14 is a cross-sectional view showing a variation of the rolling bearing shown in FIG. 13.

### DESCRIPTION OF EMBODIMENTS

### <Problem to be solved by the present disclosure>

As described above, it is difficult to fit and fix the shield to the outer ring. What has been proposed is fixing the shield to the outer ring by welding. In order to achieve a reduction in thickness of the rolling bearing by reducing its axial dimension, it is preferable to reduce the thickness of the shield. In this case, it may be difficult to carry out the attaching by welding. For example, when the heat input in welding becomes great, the shield unexpectedly deforms.

One factor of the deformation (strain) of the shield in welding may be the residual stress on the shield. That is, the shield is produced by subjecting a thin plate obtained by rolling or the like to pressing, to have a predetermined shape. Therefore, the obtained shield is associated with residual stress. When this shield is attached to the stationary ring by welding, the residual stress is released by the heat in welding and the shield is strained in a predetermined direction. This strain may pull the stationary ring and cause deformation.

An object of the present invention is to fix a shield to a stationary ring of a rolling bearing by welding, while minimizing strain on the shield and deformation of the stationary ring.

### <Summary of embodiment of present invention>

In the following, an embodiment of the present invention is summarized.

A method of manufacturing a rolling bearing according to the present embodiment is a method of manufacturing a rolling bearing including a stationary ring, a rotating ring, a plurality of rolling elements interposed between the stationary ring and the rotating ring, and a retainer retaining the plurality of rolling elements, the method including attaching a shield having an annular shape to the stationary ring, the method comprising: a preparation step of overlaying part of the shield on a side part of the stationary ring; and a welding step of laser-welding the shield to the side part. In the welding step, while a head outputting the laser and the stationary ring on which the shield is overlaid are relatively rotated about a center axis of the stationary ring, a welding operation of outputting laser on the shield to weld and a non-welding operation of not outputting laser are alternately repetitively performed.

According to the manufacturing method, while the relative rotation between the head outputting laser and the stationary ring is continuous, the welding between the shield and the stationary ring is not continuous in the circumferential direction. Therefore, the obtained rolling bearing includes the shield in which a merged part formed by welding with the stationary ring and a non-welded part not fixed to the stationary ring are circumferentially alternately provided. Since the non-welded part receives no heat input by the laser-welding, the heat input to the shield as a whole reduces, which contributes to reducing occurrence of strain on the shield. As a result, deformation of the stationary ring is minimized.

In the welding operation, while laser is intermittently output by a second period which is shorter than a first period for repetitively performing the welding operation, a merged part obtained by the welding with the stationary ring is preferably formed to have a continuous arc-shape. In this case, since the laser output is intermittent during the welding operation, there exist short times where laser is not output during the welding operation. Such times permit heat dissipation, further contributing to reducing strain on the shield.

In the preparation step, having part of the shield overlaid on the side part of the stationary ring, the shield is preferably pressed against the side part of the stationary ring with a jig, and the welding step is preferably performed while the shield is being pressed against the side part. In this manner, by virtue of the welding step being performed while the jig is pressing the shield against the side part of the stationary ring, the strain on the shield is further reduced.

The jig preferably includes a body part coaxial to the center axis of the stationary ring, and a plurality of projections extending radially outward from the body part and provided at circumferential intervals. While the projections are pressing the shield against the side part of the stationary ring, laser is preferably output between the projections circumferentially adjacent to each other. In this case, the merged part is formed between the projections circumferentially adjacent to each other, and the portion between the merged parts circumferentially adjacent to each other becomes the non-welded part. By virtue of the portion becoming the non-welded part being pressed by the projections of the jig, the strain occurring on the shield is further effectively reduced.

A rolling bearing according to the present embodiment includes: a stationary ring; a rotating ring; a plurality of rolling elements interposed between the stationary ring and the rotating ring; a retainer retaining the plurality of rolling elements; and a shield having an annular shape and attached to a side part of the stationary ring. A merged part obtained by welding with the stationary ring and a non-welded part not fixed to the stationary ring are circumferentially alternately provided at the shield.

The rolling bearing receives no heat input in welding at the non-welded part. Therefore, as a whole, the rolling bearing is manufactured with reduced heat input to the shield, and with reduced occurrence of strain on the shield. As a result, the rolling bearing with small out-of-roundness, that is, with minimized deformation of the stationary ring, is obtained.

The merged part may be provided at circumferentially regular intervals, or the merged part may be provided at circumferentially irregular intervals. When the merged part is provided at circumferentially irregular intervals, the region where the merged parts densely exist and the region where the merged parts sparsely exist can be provided.

Here, because of the small thickness of the shield, heat in welding releases residual stress and tends to invite great strain, which strain occurs greater in a predetermined direction. Therefore, taking into consideration of the direction of greater strain attributed to the released residual stress, the merged parts are provided at irregular intervals in the circumferential direction. Thus, setting the region where the merged parts densely exist and the region where the merged parts sparsely exist, strain on the shield is effectively minimized despite the entire length of the merged part being identical (that is, despite heat input being identical).

With a conventional rolling bearing with a shield, the shield is attached by being fitted to the stationary ring. In order to attain strain on the stationary ring comparable to that of such a rolling bearing whose shield is attached to the stationary ring by fitting, the proportion of the merged part occupying in the circumferential direction preferably falls within a range of 1% to 50% inclusive; the merged part is preferably provided at each of three or more locations in the circumferential direction; and the merged part at each of the three locations has a circumferential length falling within a range of 0.5 mm to 5 mm inclusive. Setting the occupying proportion of the merged part as described above, providing the merged parts at three or more locations in the circumferential direction, and limiting the circumferential length for each merged part as described above, the merged parts can be reduced while the fixing strength of the shield is maintained. Furthermore, heat input is limited and strain on the shield is reduced.

The side part of the stationary ring is preferably provided with a circumferential groove for the shield to be attached. An edge part of the shield preferably has a bent part existing within an axial range of the circumferential groove. Between a cylindrical circumferential surface of the circumferential groove and a circumferential surface of the edge part, a gap is preferably formed over the entire circumference. In this case, the bent part being formed at the edge part of the shield improves stiffness and minimizes strain on the shield in welding. The gap formed over the entire circumference between the circumferential groove and the edge part of the shield prevents the shield from interfering with the circumferential groove.

### Effect of the present disclosure

The present disclosure fixes by welding the shield to the stationary ring of the rolling bearing, and minimizes deformation of the stationary ring by reducing strain on the shield.

### <Details of embodiment of the present invention>

### [About rolling bearing]

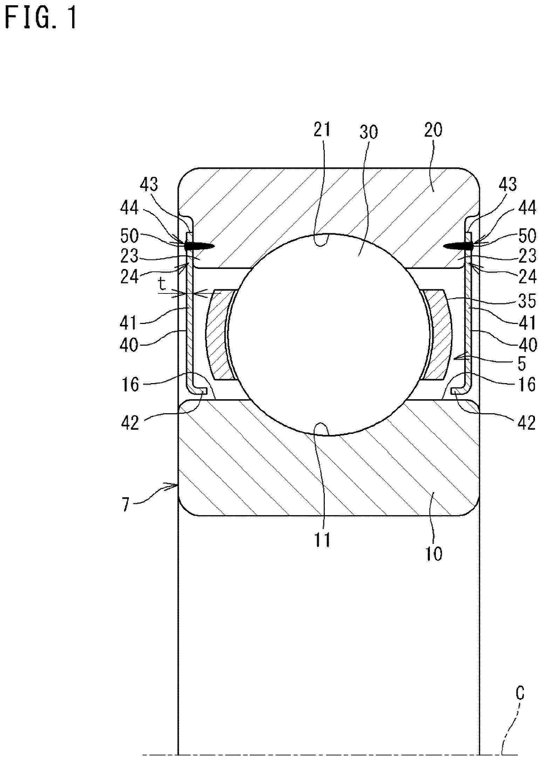

FIG. 1 is a cross-sectional view showing an exemplary rolling bearing. The rolling bearing 7 includes an inner ring 10, an outer ring 20, a plurality of balls (rolling elements) 30 provided between the inner ring 10 and the outer ring 20, an annular retainer 35, and an annular shield 40. The rolling bearing 7 shown in FIG. 1 is a deep groove ball bearing.

The inner ring 10 is a tubular member externally fitted and fixed to a shaft which is not shown, and provided with a race (a race groove) 11 at its outer circumference for the balls 30 to roll. The outer ring 20 is a member internally fitted and fixed to the inner surface of a housing which is not shown, and provided with a race (a race groove) 21 at its inner circumference for the balls 30 to roll. A plurality of balls 30 are interposed between the inner ring 10 and the outer ring 20, and the inner ring 10 and the outer ring 20 are coaxially disposed. The retainer 35 retains the plurality of balls 30 at predetermined intervals (regular intervals) in the circumferential direction. In the present embodiment, the inner ring 10 is a rotating ring that rotates with the shaft, and the outer ring 20 is a stationary ring that is stationary with the housing.

The inner ring 10, the outer ring 20, and the balls 30 are formed of bearing steel (SUJ2). The retainer 35 is formed of metal such as stainless steel (formed by metal pressing) or resin. The shield 40 is formed of stainless steel (SUS304 or SUS430). In the present embodiment, while the inner ring 10 and the outer ring 20 and the shield 40 are formed of metal, the material of shield 40 differs from the materials of the inner ring 10 and the outer ring 20. The inner ring 10, the outer ring 20, and the balls 30 may be formed of stainless steel (SUS440C). The material of the shield 40 may be carbon steel (SPCC).

A bearing-inside 5 which is the space between the inner ring 10 and the outer ring 20 where the balls 30 exist is filled with grease as a lubricant. The shield 40 prevents entry of water or foreign objects outside the bearing into the bearing-inside 5, and prevents leakage of the grease in the bearing-inside 5 to the outside.

The shield 40 is provided on each of the axially opposite sides relative to the rolling bearing 7. Each shield 40 is welded to the side part 23 of the outer ring 20, so as to oppose to part of the outer circumference (a shoulder outer circumferential surface 16) of the inner ring 10 via a gap in the radial direction. While the shield 40 on the axial one side and the shield 40 on the axial other side are opposite to each other in terms of the attached direction, they are identically structured.

The shield 40 is obtained by subjecting a metal flat plate member to pressing, and has its thickness reduced. For example, a thickness t of the shield 40 may fall within a range of 0.2 millimeters to 0.5 millimeters inclusive, and the shield 40 is a thin annular member. The inner diameter of the shield 40 falls within a range of 20 millimeters to 120 millimeters inclusive. The shield 40 shown in FIG. 1 includes a flat annular part 41 and a short cylindrical part 42. The annular part 41 is an annular flat-plate portion without uneven surfaces, and provided along the plane perpendicular to the center axis C of the rolling bearing 7. The center axis C of the rolling bearing 7 coincides with the center axis of the inner ring 10 and the center axis of the outer ring 20.

Part of the outer circumferential part of the shield 40 is laser-welded, and the shield 40 is fixed by welding at the side part 23 of the outer ring 20. Specifically, a midway part 44 which is positioned on the radial inner side by a predetermined dimension from the outer peripheral edge of the shield 40 is partially laser-welded, which will be described later. The shield 40 is partially fixed by welding to the side part 23 of the outer ring 20. The midway part 44 is a region being annular in the circumferential direction. The welded part is partially formed at the midway part 44. The welded part is a merged part 50 where part of the shield 40 and part of the outer ring 20 merge with each other, and is also referred to as a nugget or a bead. Note that, in FIG. 1 and others, the merged part 50 is exaggerated for the sake of clarity.

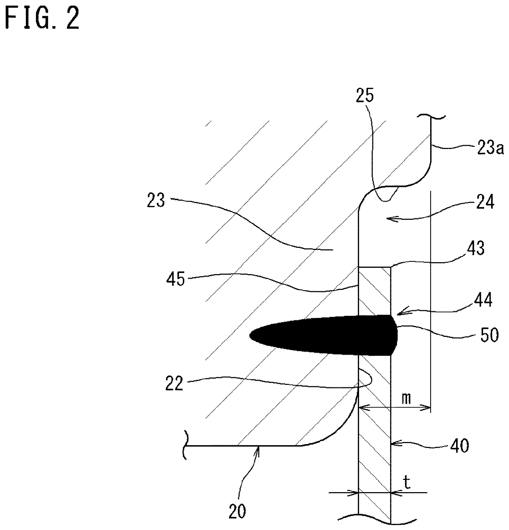

FIG. 2 is a cross-sectional view showing the outer circumferential part of the shield 40 on the axial one side (the right side in FIG. 1) and around the shield 40. At the side part 23 of the outer ring 20, a circumferential groove 24 with a small axial dimension m is formed. The circumferential groove 24 is formed over the entire circumference of the side part 23. As the state where the side surface 45 of the outer circumferential part of the shield 40 is abutted on the side surface 22 in the circumferential groove 24, the shield 40 is fixed by welding to the outer ring 20 in the circumferential groove 24. The diameter (the inner diameter) of the inner circumferential surface 25 of the circumferential groove 24 is set to be greater than the diameter (the outer diameter) of the shield 40 and a gap is formed between the inner circumferential surface 25 and an edge part 43 of the shield 40.

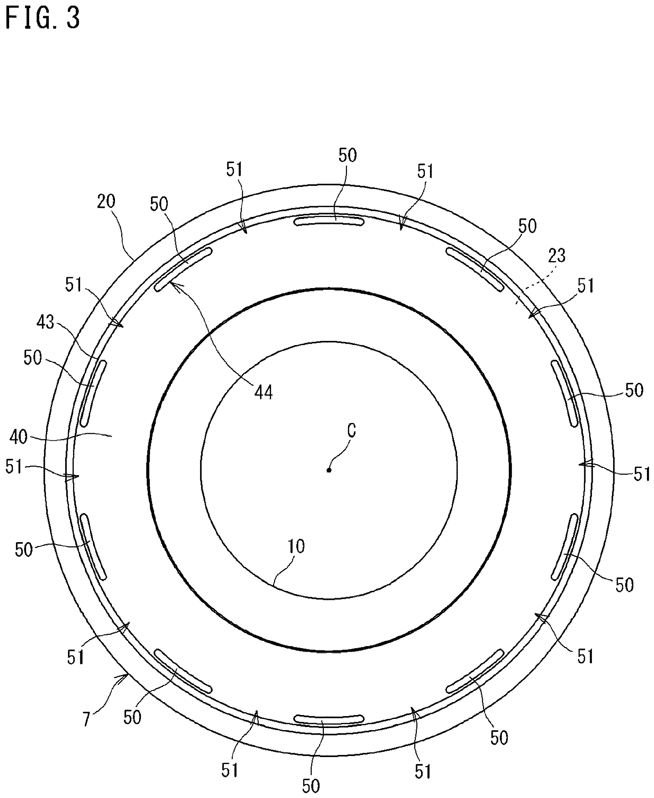

The axial dimension m of the circumferential groove 24 is set to be greater than the thickness dimension t of the shield 40. This is to prevent the shield 40 and the merged part 50 from protruding from the side surface 23a on the axially outermost side of the side part 23 of the outer ring 20 to the axially outer side (the right side in FIG. 3).

FIG. 3 is a side view of the rolling bearing 7 shown in FIG. 1. As described above, part of the outer circumferential part of the shield 40 (the midway part 44) is partially fixed by welding to the side part 23 of the outer ring 20. As shown in FIG. 3, at the midway part 44 positioned on the radial inner side by a predetermined dimension from the outer peripheral edge of the shield 40, the merged part 50 being welded to the outer ring 20 and a non-welded part (a portion not welded) 51 not fixed to the outer ring 20 are circumferentially alternately provided. In the manner shown in FIG. 3, the merged part 50 is provided at circumferentially regular intervals.

### [As to method of manufacturing rolling bearing]

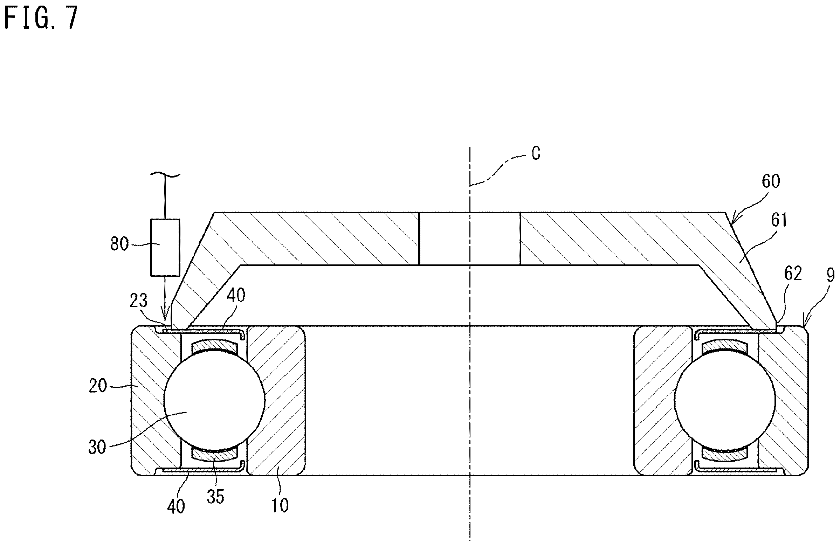

A description will be given of a method of manufacturing the rolling bearing 7 which is carried out by attaching the annular and thin shield 40 to the outer ring 20. In this manufacturing method, with reference to FIG. 1, firstly, the inner ring 10, the outer ring 20, the balls 30, and the retainer 35 are integrated, to obtain a bearing part which is an intermediate product (an assembling step). Next, a preparation step is performed, in which part of the shield 40 (an outer circumferential part) is overlaid on the side part 23 of the outer ring 20 of the bearing part. Thereafter, a welding step is performed, in which the shield 40 is laser-welded (fiber laser-welded) to the side part 23 of the outer ring 20. With the rolling bearing 7 shown in FIG. 1, the preparation step and the welding step are performed on the axial one side, and thereafter the preparation step and the welding step are performed on the axial other side. In the preparation step and the welding step, the laser-welding is performed from above, with the center axis C of the bearing part and the rolling bearing 7 set in the vertical direction (see FIG. 7).

### [As to preparation step]

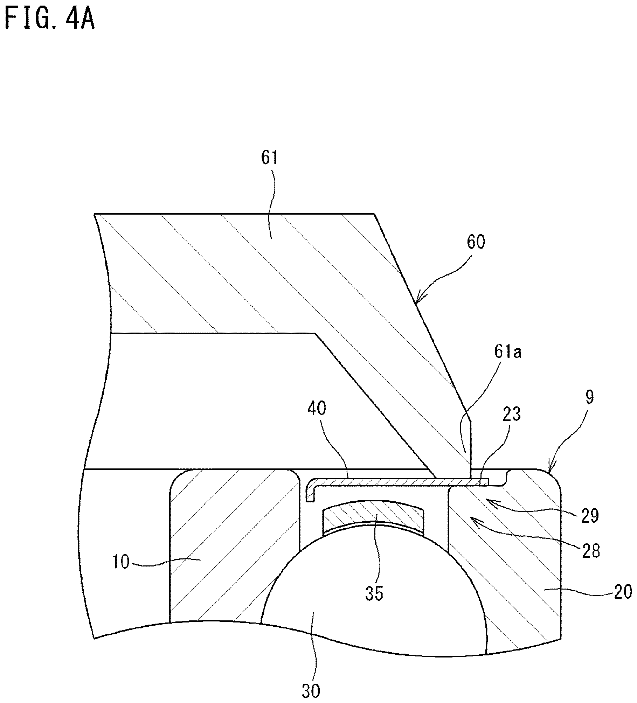

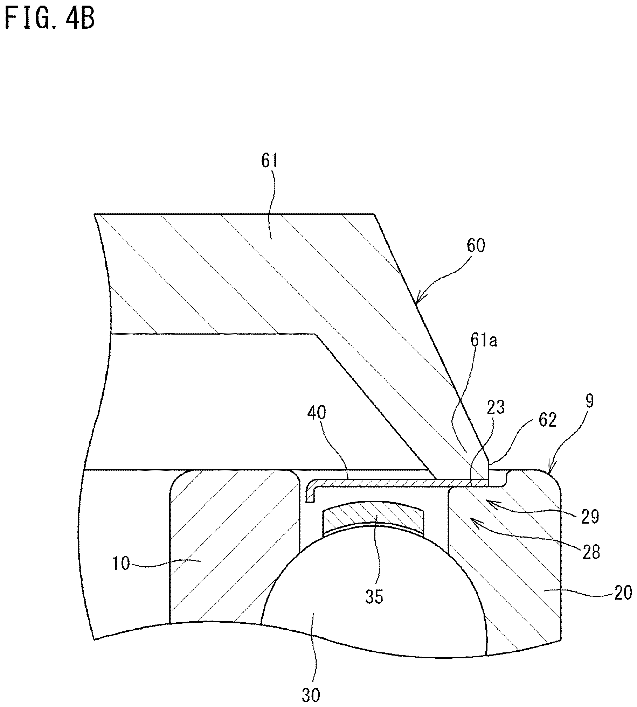

FIGS. 4A and 4B are each an explanatory illustration showing the manner of the preparation step with reference to the cross section of the bearing part 9 which is an intermediate product through the assembling step, the shield 40, and the jig 60. In the preparation step, having part of the shield 40 (the outer circumferential part) overlaid on the side part 23 of the outer ring 20, the shield 40 is pressed against the side part 23 of the outer ring 20 with the jig 60. In this pressed state, the welding step is performed. The pressing with the jig 60 is driven by any actuator or the like which is not shown.

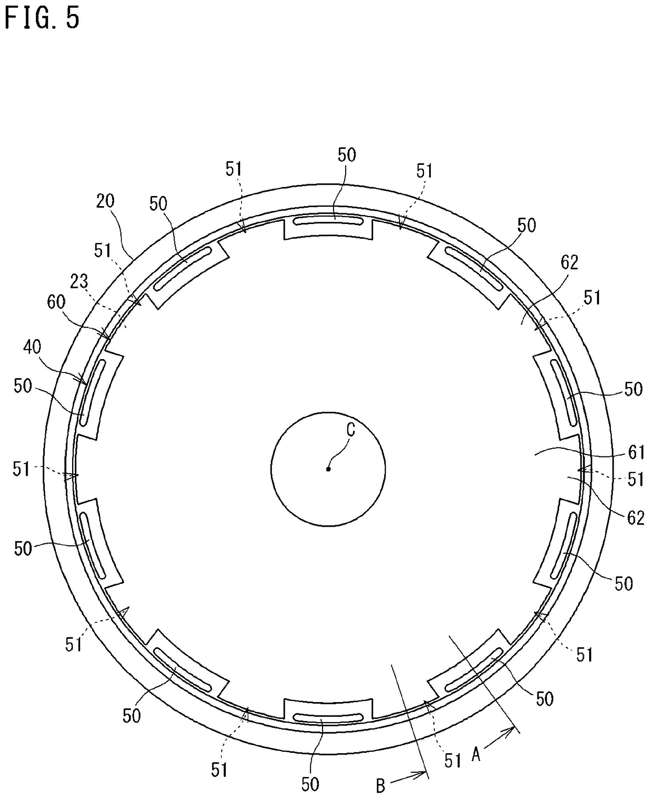

FIG. 5 is an illustration as seen on the center axis C (from above) of the state where the shield 40 is pressed against the side part 23 of the outer ring 20 with the jig 60. The jig 60 includes a body part 61 that is coaxial to the center axis C, and a plurality of projections 62 that extend radially outward from the body part 61 and provided at circumferential intervals. The jig 60 (hereinafter also referred to as the "first-mode jig 60") is gear-shaped as seen on the center axis C. The number of the projections 62 agrees with the number of the merged parts 50. FIG. 4A is a cross-sectional diagram taken along arrow A in FIG. 5. FIG. 4B is a cross-sectional diagram taken along arrow B in FIG. 5. As shown in FIG. 4A, an outer circumferential edge 61a of the body part 61 is capable of pressing the shield 40 against the inner circumferential region 28 in the side part 23 of the outer ring 20. As shown in FIG. 4B, the outer circumferential edge 61a of the body part 61 is capable of pressing the shield 40 against the inner circumferential region 28 in the side part 23 of the outer ring 20, and further the projections 62 are capable of pressing the shield 40 against the intermediate region 29 in the side part 23 of the outer ring 20. The intermediate region 29 is the region on the radially outer side relative to the inner circumferential region 28. As shown in FIG. 5, between the projections 62, 62 circumferentially adjacent to each other, the shield 40 is exposed. Therefore, the portion of the shield 40 exposed between the projections 62, 62 can be laser-welded. The portions pressed by the projections 62 become the non-welded parts 51.

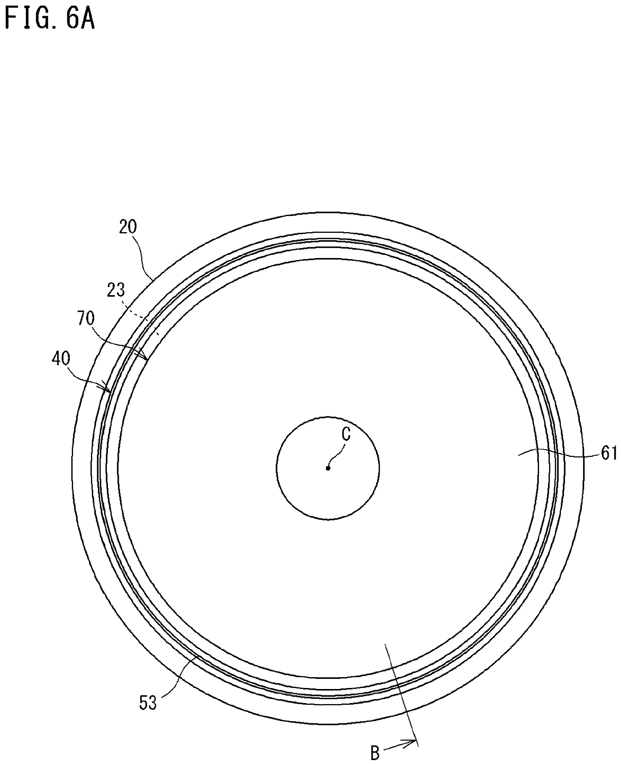

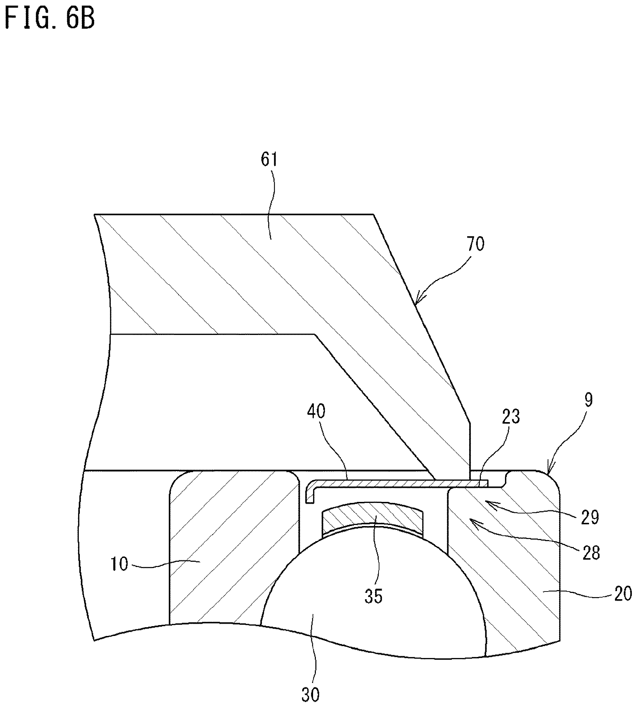

FIG. 6A is an illustration as seen on center axis C of the state where the shield 40 is pressed against the side part 23 of the outer ring 20 with a jig 70 of other mode (hereinafter also referred to as the "second-mode jig 70"). FIG. 6B is a cross-sectional view taken along arrow B in FIG. 6A. Being different from the jig 60 shown in FIG. 5, the second-mode jig 70 is formed by just the circular body part 61 coaxial to the center axis C. In manufacturing the rolling bearing 7, while the second-mode jig 70 may be used, it is preferable to employ the jig 60 shown in FIG. 5 in view of increasing the region where the shield 40 is pressed thereby minimizing the strain on the shield 40.

Note that, the example shown in FIG. 6A is different from the above-described embodiment in that laser-welding is performed over the entire circumference. That is, the merged part 53 which is circumferentially continuous is formed. When the laser-welding is to be performed over the entire circumference, the second-mode jig 70 must be used. In this case, as shown in FIG. 6B, while the second-mode jig 70 is capable of pressing the shield 40 against the inner circumferential region 28 in the side part 23 of the outer ring 20, the second-mode jig 70 cannot press the shield 40 against the intermediate region 29 in the side part 23 of the outer ring 20.

Thus, in the rolling bearing 7 (see FIG. 3) assembled through the manufacturing method according to the present embodiment, the merged part 50 and the non-welded part 51 are circumferentially alternately provided at the shield 40. In assembling the rolling bearing 7, as shown in FIG. 5, the first-mode jig 60 including a plurality of projections 62 extending radially outward from the body part 61 should be used. This jig 60 is capable of pressing the shield 40 against the outer ring 20 over a wider area.

### [As to welding step]

A further detailed description will be given of the welding step. FIG. 7 is an explanatory illustration of the welding step. In the welding step, while a head 80 outputting laser and the outer ring 20 on which the shield 40 is overlaid in the preparation step are relatively rotated about the center axis C, a "welding operation" in which laser is output from the head 80 to the shield 40 thereby welding and a "non-welding operation" in which laser is not output are alternately performed. In the present embodiment, the head 80 is fixed, and the bearing part 9 including the outer ring 20 with the shield 40 is rotated about the center axis C. During one rotation (a rotation of 360 degrees) of the outer ring 20, the welding operation and the non-welding operation are alternately repetitively performed. During one rotation of the outer ring 20, the shield 40 is pressed against the side part 23 of the outer ring 20 with the jig 60. The jig 60 also rotates in synchronization with the shield 40 and the outer ring 20. The welding operation and the non-welding operation may be switched by exerting control of switching between electrical ON and OFF for laser oscillation, which the control is easily realized.

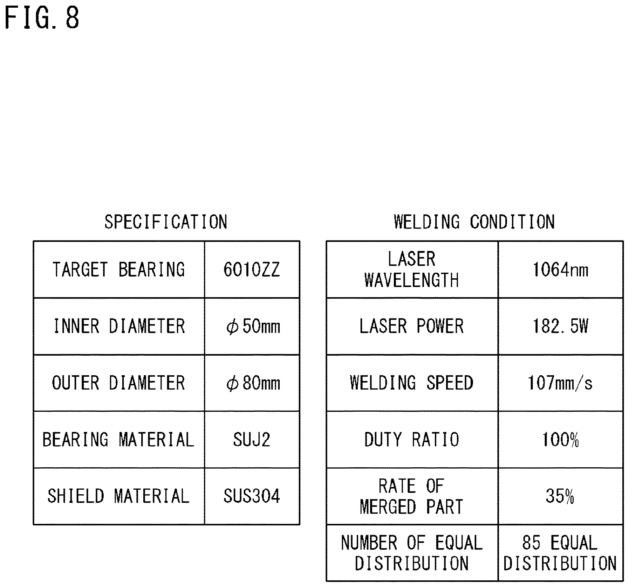

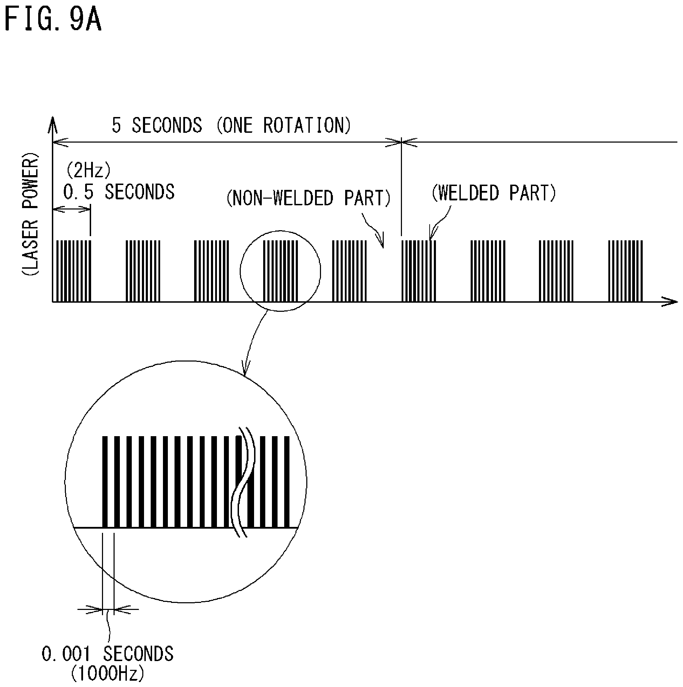

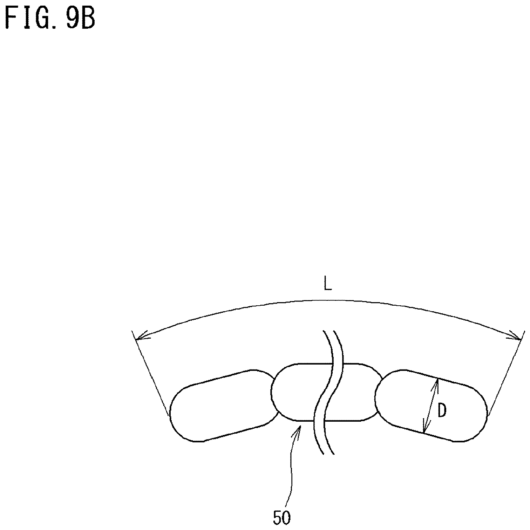

FIG. 8 shows an exemplary specification of the rolling bearing 7 according to the present embodiment and an exemplary welding condition in the welding step. In FIG. 8, the number of equally distributed merged parts 50 is "85". On the other hand, for the sake of convenience, FIG. 3 and others show the equally distributed merged parts 50 by the number smaller than "85". FIGS. 9A and 9B are each an explanatory illustration of the welding step for manufacturing the rolling bearing 7 shown in FIG. 3. FIG. 9A is a time chart describing the welding operation and the non-welding operation in the welding step, in which the horizontal axis represents time and the vertical axis represents the output of laser (laser power) from the head 80. The outer ring 20 makes one rotation every 5 seconds, whereby the welding operation is performed on the shield 40 at the interval of 0.5 seconds. The non-welding operation is also performed at the interval of 0.5 seconds. The period by which the welding operation is repeatedly performed (in the present embodiment, 0.5 seconds) is referred to as the first period. By the welding step, at the midway part 44 of the shield 40 (see FIG. 3), the merged part 50 and the non-welded part 51 are circumferentially alternately provided.

As shown in the enlarged diagram of part of the time chart in FIG. 9A, while the welding operation is executed, laser is intermittently output by a second period (for example, 0.001 seconds) shorter than the first period for repeatedly performing the welding operation. That is, the laser output is a pulse wave. Thus, while the laser is intermittently output in the time slot of the welding operation, as shown in FIG. 9B, the merged part 50 is continuously provided. In the present embodiment, since welding is performed while the outer ring 20 is rotated, the merged part 50 is formed to have a continuous arc-shape. That is, the merged part 50 is formed to have a shape (an arc-shape) in which the circumferential length (circumferential dimension) L is greater than the radial dimension D. In this point, the welding in the present embodiment is different from spot welding.

As described above, while the laser output in the welding operation is a pulse wave, the laser output may be constant during the welding operation. The wavelength of the laser output from the head 80 is set to fall within a range of 1064 nanometers to 1090 nanometers inclusive. The output power of the laser is less than 250W, which is small. By allowing laser to be output from the axially outer side of the shield 40 to the shield 40, part of the shield 40 and part of the outer ring 20 are welded to each other. In the present embodiment, the welding is performed without using any filler metal. The welding condition such as the duty ratio may not be those shown in FIG. 8, and may be changed.

In the above-described welding step, by subjecting the shield 40 to laser-welding, the merged part 50 penetrating through the shield 40 in the thickness direction is obtained (see FIG. 2), and the thin shield 40 is fixed to the side part 23 of the outer ring 20.

Completing the above-described welding step completes the rolling bearing 7.

### [As to rolling bearing 7 according to the present embodiment and method of manufacturing the same]

A description will be given of deformation (strain) of the shield 40 in welding. A factor of strain on the shield 40 in welding may be residual stress on the shield 40. That is, the shield 40 is produced by subjecting a thin plate obtained by rolling or the like to pressing, to have a predetermined shape. Therefore, the obtained shield 40 is associated with residual stress. When this shield 40 is attached to the outer ring 20 by welding, the residual stress is released by the heat in welding and the shield 40 is strained in a predetermined direction. This strain may pull the outer ring 20 and cause deformation. Therefore, in the manufacturing method according to the present embodiment, the heat input to the shield 40 in the welding is reduced, to minimize occurrence of strain on the shield 40.

That is, in the welding step in the manufacturing method according to the present embodiment, as described above (see FIG. 7), while the outer ring 20 on which the shield 40 is overlaid is rotated about the center axis C relative to the head 80 outputting laser, the welding operation in which laser is applied onto the shield 40 and the non-welding operation not outputting laser are alternately repeatedly performed. According to this manufacturing method, while the rotation of the shield 40 and the outer ring 20 for welding is continuous, the welding of the shield 40 and the outer ring 20 is disconnected in the circumferential direction. Therefore, in the manufactured rolling bearing 7, the merged part 50 formed by welding to the outer ring 20 and the non-welded part 51 not fixed to the outer ring 20 are circumferentially alternately provided at the shield 40. The non-welded part 51 receives no heat input by the laser-welding and, therefore, the heat input to the shield 40 as a whole is reduced. Thus, strain associated with the shield 40 is reduced, and deformation of the outer ring 20 is minimized.

A further description will be given of deformation (strain) of the shield 40 in welding. In welding the shield 40 to the outer ring 20, the shield 40 thermally expands by heat of the welding. When the shield 40 is fixed to the outer ring 20 and the shield 40 is cooled by heat dissipation, the shield 40 shrinks. However, since the shield 40 is fixed to the outer ring 20, the shield 40 cannot fully shrink and stress occurs. Then, the shield 40 pulls the outer ring 20, causing strain on the shield 40 and the outer ring 20. In view of this, the manufacturing method according to the present embodiment reduces heat input to the shield 40 in welding as described above, thereby minimizing occurrence of strain on the shield 40.

The manufacturing method according to the present embodiment does not stop the rotation of the outer ring 20 for every rotation, that is, it does not include a sequence of rotation, stop of the rotation, and welding. This contributes to reducing the work time.

Further, as described with reference to FIG. 9A, in the welding operation according to the present embodiment, while laser is intermittently output by the second period (0.001 seconds) which is shorter than the first period (0.5 seconds) for repeatedly performing the welding operation, the merged part 50 is formed to be continuously arc-shaped as shown in FIG. 9B. Thus, since the laser output is intermittent during the welding operation, there exist short times where laser is not output during the welding operation. Such times permit heat dissipation, further reducing strain on the shield 40.

As shown in FIG. 7, in the preparation step, the shield 40 is pressed against the side part 23 of the outer ring 20 with the jig 60 having part of the shield 40 overlaid on the side part 23 of the outer ring 20. In this pressing state, the welding step is performed. This further reduces strain on the shield 40. Further, the jig 60 includes a plurality of projections 62 that extend radially outward from the body part 61 which is coaxial to the center axis C. The projections 62 (see FIG. 5) are provided at circumferential intervals. By the projections 62 being brought into contact with the shield 40, the shield 40 is pressed against the side part 23 of the outer ring 20. In this state, laser is applied between the projections 62, 62 circumferentially adjacent to each other, to weld the shield 40 and the outer ring 20 to each other.

The merged part 50 is formed between the projections 62, 62 circumferentially adjacent to each other, and the portion between the merged parts 50, 50 circumferentially adjacent to each other becomes the non-welded part 51. This portion becoming the non-welded part 51 can be pressed by the projections 62 of the jig 60.

This increases the portions of the shield 40 restrained by the jig 60, and further effectively reduces strain occurring on the shield 40.

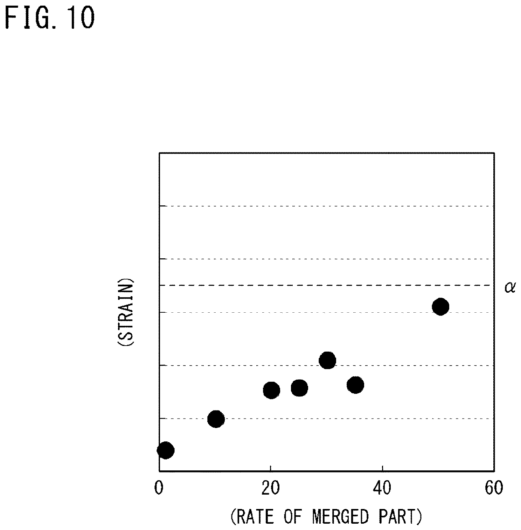

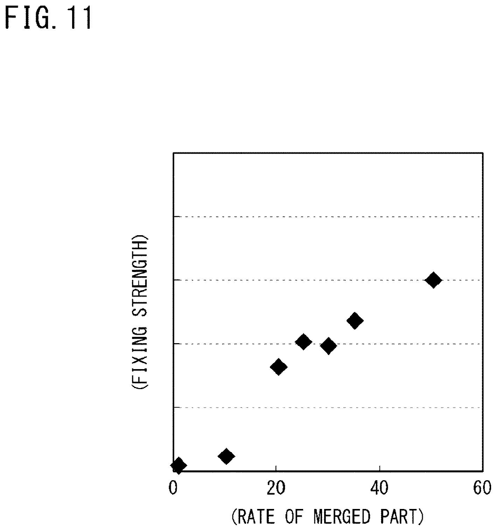

The ratio between the merged part 50 and the non-welded part 51 can be changed. The circumferential length of the merged part 50 and the like can also be changed. FIG. 10 is a graph showing the relationship between the rate of the merged part 50 and the strain on the outer ring 20. FIG. 11 is a graph showing the relationship between the rate of the merged part 50 and the fixing strength of the shield 40. The "rate of the merged part 50" is the proportion of the merged part 50 occupying the circumferential length.

With reference to FIGS. 10 and 11, the rate of the merged part 50 preferably falls within a range of 1% to 50% inclusive. With the rate of 1% or more, the shield 40 obtains the fixing strength enough to avoid its coming off from the outer ring 20. When the rate of the merged part 50 exceeds 50%, the strain on the outer ring 20 may exceed a predetermined value α.

Note that, the predetermined value α is the tolerance value of strain on the outer ring 20. Specifically, it is the strain (tolerance value) of the outer ring for the rolling bearing having its shield attached to the outer ring by the conventional fitting. That is, in order to reduce the strain on the outer ring 20 than that in the conventional example, the rate of the merged part 50 should preferably set to be 50% or less.

Setting three or more merged parts 50 in the circumferential direction, the circumferential length L (see FIG. 9B) for each merged part 50 falls within a range of 0.5 mm to 5 mm inclusive. With the circumferential length L of 0.5 mm or more, the shield 40 obtains the fixing strength enough (minimum possible fixing strength) to avoid its coming off from the outer ring 20. In order to reduce strain than that in the conventional rolling bearing, the circumferential length L is preferably 5 mm or less. In this manner, by shortening the circumferential length L of the merged part 50 and reducing the number of the merged part 50, heat input associated with welding reduces.

Thus, the proportion (the ratio) of the merged part 50 occupying the circumferential length preferably falls within a range of 1% to 50% inclusive. Preferably, three or more merged parts 50 are provided in the circumferential direction, and the circumferential length L for each merged part 50 falls within a range of 0.5 mm to 5 mm inclusive. In this manner, setting the occupying proportion of the merged part 50 as described above, providing three or more merged parts 50 in the circumferential direction, and limiting the circumferential length L for each merged part 50 as described above, the merged part 50 can be reduced while the fixing strength of the shield 40 is secured. As a result, heat input associated with welding is limited, and strain on the shield 40 is reduced.

### [As to rolling bearing of other model

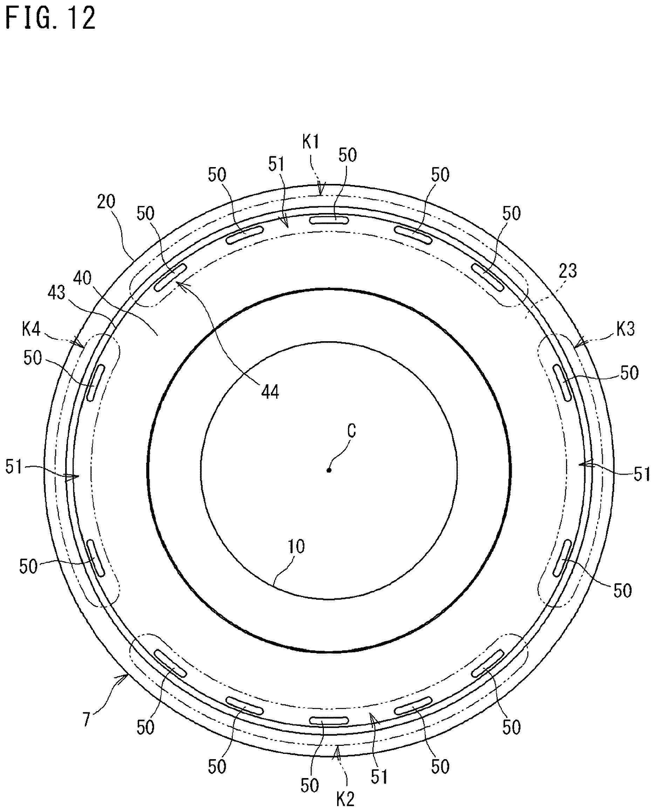

A description has been given of the above-described embodiment (see FIG. 3) in which the merged parts 50 are provided at circumferentially regular intervals. As shown in FIG. 12, the merged parts 50 may be provided at circumferentially irregular intervals. That is, the intervals between the merged parts 50, 50 circumferentially adjacent to each other are uneven depending the circumferential position along the annular midway part 44 of the shield 40. In the mode shown in FIG. 12, the interval of the merged parts 50 in the first region K1 and the second region K2 separated from each other by 180 degrees with reference to the center axis C is narrower than the interval of the merged parts 50 in the third region K3 and the fourth region K4 which are separated from the first region K1 (the second region K2) by 90 degrees. Thus, when the merged parts 50 are arranged at irregular intervals, in the circumferential direction, there exist regions (the first region K1 and the second region K2) where the merged parts 50 densely exist and regions (the third region K3 and the fourth region K4) where the merged parts 50 sparsely exist as compared to the dense regions.

Because of the small thickness of the shield 40, heat in welding releases residual stress and tends to invite great strain, which strain occurs greater in a predetermined direction. Therefore, as shown in FIG. 12, taking into consideration of the direction of greater strain attributed to the released residual stress, the merged parts 50 should be arranged at irregular intervals in the circumferential direction. Thus, setting the region where the merged parts 50 densely exist (the first region K1 and the second region K2) and the region where the merged parts 50 sparsely exist (the third region K3 and the fourth region K4) in accordance with the magnitude and direction of residual stress on the shield 40, strain on the shield 40 is effectively minimized despite the entire length of the merged parts 50 being identical (that is, despite heat input being identical).

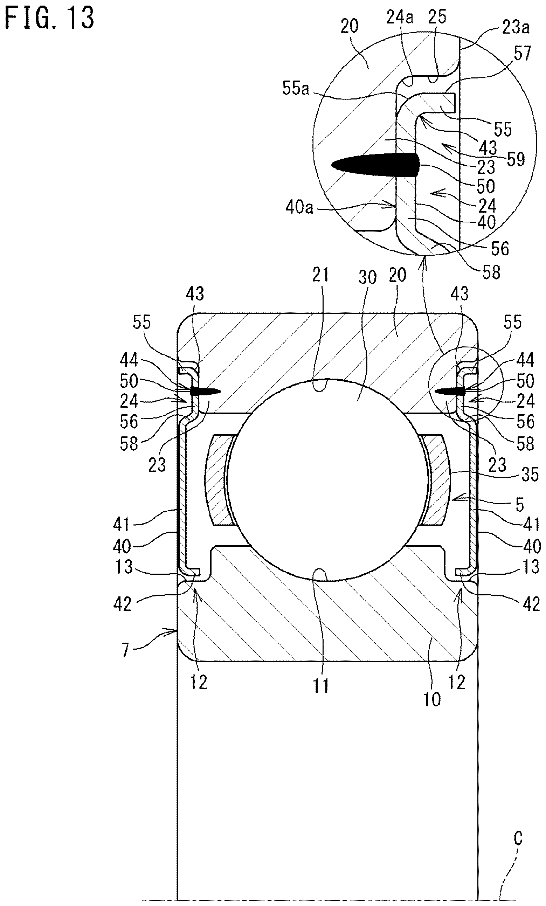

FIG. 13 is a cross-sectional view showing the rolling bearing 7 of another mode. Similarly to the rolling bearing 7 shown in FIG. 1, this rolling bearing 7 is provided with the circumferential groove 24 at the side part 23 of the outer ring 20 for the shield 40 to be attached. The rolling bearing 7 shown in FIG. 13 is different from the rolling bearing 7 shown in FIG. 1 in the mode of the inner ring 10 and the shield 40. The inner ring 10 shown in FIG. 13 is provided with an annular groove 13 at a shoulder part 12, so as to form a labyrinth gap with the inner circumferential end of the shield 40.

As shown in the enlarged diagram in FIG. 13, the outer circumferential part 40a of the shield 40 includes an annular fix part 56 fixed by welding to the side part 23 of the outer ring 20, and a bent part 55 continuous to a radially outward end of the fix part 56. The bent part 55 is formed by a rounded short tubular portion about the center axis C. The bent part 55 is short in the axial direction, and exists within an axial range of the circumferential groove 24 so as not to protrude from the side surface 23a of the outer ring 20. In this manner, the radially outward edge part 43 of the shield 40 includes the bent part 55. Between the outer circumferential surface 57 of the edge part 43 and the cylindrical inner circumferential surface 25 of the circumferential groove 24, a gap is formed over the entire circumference (similarly to the mode shown in FIG. 2).

In the mode shown in FIG. 13, by virtue of the bent part 55 being formed at the edge part 43 of the shield 40, stiffness at the outer circumferential part 40a of the shield 40 improves, which contributes to minimizing strain on the shield 40 in welding. Furthermore, by virtue of the gap being formed over the entire circumference between the circumferential groove 24 and the edge part 43 of the shield 40, the edge part 43 is prevented from interfering with the circumferential groove 24 even if the shield 40 is deformed in the radial direction in attaching the shield 40 by welding. The circumferential groove 24 is provided with a concave corner rounded part 24a, and part of the bent part 55 is a convex rounded part 55a. The radius of curvature of the convex rounded part 55a is slightly greater than the radius of curvature of the corner rounded part 24a. This structure prevents the shield 40 from being displaced because of the edge part 43 of the shield 40 interfering with the corner rounded part 24a.

In the mode shown in FIG. 13, the shield 40 further includes a second bent part 58 which is continuous to an radial inner side end of the fix part 56. The second bent part 58 further improves the stiffness at the outer circumferential part 40a of the shield 40 and minimizes occurrence of strain.

The shield 40 includes, in sequence from the radially outward side, a first bent part 55, an annular fix part 56, a second bent part 58, an annular part 41, and a short cylindrical part 42. In the region surrounded by the first bent part 55, the annular fix part 56, and the second bent part 58, a recessed part 59 continuous in the circumferential direction is formed. At the recessed part 59, part of the merged part 50 exists. The recessed part 59 prevents the merged part 50 from protruding from the side surface 23a of the outer ring 20.

The second bent part 58 has a shape that extends axially outward (the right side in FIG. 13) as becoming nearer to the inner ring 10. The second bent part 58 is continuous to a flat and ring-shaped annular part 41. Via the second bent part 58, the annular part 41 is positioned on the axially outer side relative to the fix part 56, to widen the gap between the retainer 35. The widened region is filled with grease. This increases the amount of grease enclosed in the bearing-inside 5.

In the mode shown in FIG. 1, the radially outside portion of the shield 40 is flat as a whole. Therefore, it is difficult to visually recognize the portion to be welded. On the other hand, in the mode shown in FIG. 13, the portion between the first bent part 55 and the second bent part 58, that is, the range of the fix part 56 can be easily visually specified as the portion to be welded. In this manner, by virtue of the shield 40 including the second bent part 58, the operator can easily visually align and weld the shield 40 with the outer ring 20 in the preparation step.

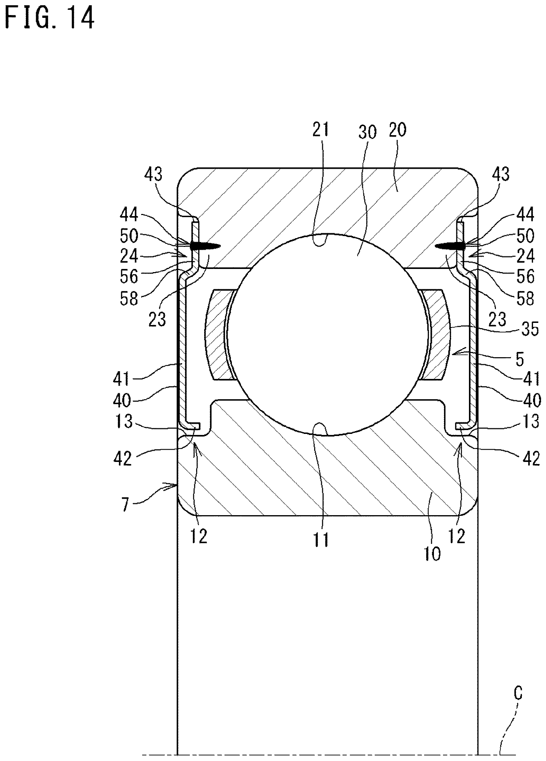

FIG. 14 is a cross-sectional view showing a variation of the rolling bearing 7 shown in FIG. 13. In the rolling bearing 7 shown in FIG. 14, the outer circumferential part of the shield 40 includes an annular fix part 56 which is fixed by welding to the side part 23 of the outer ring 20, and a bent part 58 which is continuous to an radial inner side end of the fix part 56. This structure improves stiffness at the outer circumferential part of the shield 40 and minimizes strain of the shield 40 with welding. The shield 40 may have any shape other than that shown in the drawing.

In the mode shown in FIG. 14 also, similarly to the mode shown in FIG. 13, the second bent part 58 allows an increase in the amount of grease enclosed in the bearing-inside 5. The second bent part 58 allows the operator to easily visually align and weld the shield 40 with the outer ring 20 in the preparation step.

In the foregoing, a description has been given of the embodiments where the shield 40 is attached to the outer ring 20. Here, in the case where the inner ring 10 is the stationary ring and the outer ring 20 is the rotating ring, the shield 40 is attached to the inner ring 10. In this case, while not shown in the drawings, a midway part on the radially outer side by a predetermined dimension from the inner peripheral edge of the shield is attached by welding to the side part of the inner ring, and the welded part (the merged part) is intermittently formed at the midway part.

The rolling bearing of the present invention is not limited to those shown in the drawings, and may be in other mode within the scope of the present invention. The method of manufacturing the same may also be in other mode within the scope of the present invention.

For example, while the embodiments show the ball bearing, the rolling bearing may be a roller bearing including rollers as the rolling elements.

Furthermore, while the embodiments show the case where the shield 40 is attached to each of the axial opposite ends of the outer ring 20, it may be attached to just one axial side.

### REFERENCE SIGNS LIST

7: ROLLING BEARING
10: INNER RING (ROTATING RING)
20: OUTER RING (STATIONARY RING)
23: SIDE PART
24: CIRCUMFERENTIAL GROOVE
25: INNER CIRCUMFERENTIAL SURFACE (CIRCUMFERENTIAL SURFACE)
30: BALL (ROLLING ELEMENT)
35: RETAINER
40: SHIELD
43: EDGE PART
50: MERGED PART
51: NON-WELDED PART
55: BENT PART
57: OUTER CIRCUMFERENTIAL SURFACE (CIRCUMFERENTIAL SURFACE)
60: JIG
61: BODY PART
62: PROJECTION
70: JIG
80: HEAD
C: CENTER AXIS
L: CIRCUMFERENTIAL LENGTH

## Claims

1. A method of manufacturing a rolling bearing including a stationary ring (20), a rotating ring (10), a plurality of rolling elements (30) interposed between the stationary ring and the rotating ring, and a retainer (35) retaining the plurality of rolling elements, the method comprising attaching a shield (40) having an annular shape to the stationary ring (20), the method comprising:
a preparation step of overlaying part of the shield (40) on a side part (23) of the stationary ring (20); and
a welding step of laser-welding the shield to the side part, wherein in the welding step, while a head (80) outputting the laser and the stationary ring (20) on which the shield is overlaid, are relatively rotated about a center axis (C) of the stationary ring (20),
a welding operation of outputting laser on the shield to weld and a non-welding operation of not outputting laser are alternately repetitively performed such that in the welding operation, while laser output which is a pulse wave, is intermittently output by a second period which is shorter than a first period by which the welding operation is repetitively performed, a merged part (50) obtained by the welding with the stationary ring (20) is formed to have a continuous arc shape.

2. The method of manufacturing a rolling bearing according to claim 1 , wherein, in the preparation step, having part of the shield (40) overlaid on the side part (23) of the stationary ring (20), the shield is pressed against the side part of the stationary ring with a jig (60), and
the welding step is performed while the shield is being pressed against the side part.

3. The method of manufacturing a rolling bearing according to claim 2, wherein
the jig includes a body part (61) coaxial to the center axis of the stationary ring, and a plurality of projections (62) extending radially outward from the body part and provided at circumferential intervals, and
while the projections are pressing the shield against the side part of the stationary ring, laser is output between the projections circumferentially adjacent to each other.

4. A rolling bearing manufactured with the method of manufacturing of claim 1, the rolling bearing comprising:
a stationary ring (20);
a rotating ring (10);
a plurality of rolling elements (30) interposed between the stationary ring and the rotating ring;
a retainer (35) retaining the plurality of rolling elements; and
a shield (40) having an annular shape and attached to a side part (23-of the stationary ring (20), wherein a merged part (50) obtained by welding with the stationary ring and a non-welded part (51) not fixed to the stationary ring are circumferentially alternately provided at the shield.

5. The rolling bearing according to claim 4, wherein the merged part (50) is provided at circumferentially regular intervals.

6. The rolling bearing according to claim 4, wherein the merged part (50) is provided at circumferentially irregular intervals.

7. The rolling bearing according to any one of claims 4 to 6, wherein a proportion of the merged part occupying in a circumferential direction falls within a range of 1% to 50% inclusive, the merged part is provided at each of three or more locations in the circumferential direction, and the merged part at each of the three locations has a circumferential length falling within a range of 0.5 mm to 5 mm inclusive.

8. The rolling bearing according to any one of claims 4 to 7, wherein
the side part (23) of the stationary ring (20) is provided with a circumferential groove (24) for the shield to be attached,
an edge part (43) of the shield (40) has a bent part (55) existing within an axial range of the circumferential groove (24), and
between a cylindrical circumferential surface (25) of the circumferential groove (24) and a circumferential surface (57) of the edge part, a gap is formed over an entire circumference.

## Patentansprüche

1. Verfahren zur Herstellung eines Wälzlagers, umfassend einen stationären Ring (20), einen rotierenden Ring (10), mehrere Wälzelemente (30), positioniert zwischen dem stationären Ring und dem rotierenden Ring, und einen Halter (35), der die mehreren Wälzelemente hält, wobei das Verfahren Befestigen eines Schildes (40) mit einer ringförmigen Form an dem stationären Ring (20) umfasst, wobei das Verfahren Folgendes umfasst:
einen Vorbereitungsschritt des Überdeckens eines Seitenteils (23) des stationären Rings (20) von einem Teil des Schildes (40); und
einen Schweißschritt des Laserschweißens des Schildes am Seitenteil, wobei im Schweißschritt, während ein Kopf (80), der den Laser ausgibt, und der stationäre Ring (20), der vom Schild überdeckt wird, relativ um eine mittlere Achse (C) des stationären Rings (20) gedreht werden,
eine Schweißoperation des Ausgebens des Lasers auf den zu schweißenden Schild und eine Nicht-Schweißoperation des Nicht-Ausgebens des Lasers alternierend wiederholt durchgeführt werden, sodass, bei der Schweißoperation, während die Laserausgabe, die eine Pulswelle ist, intermittierend mit einer zweiten Periode ausgegeben wird, die kürzer als eine erste Periode ist, mit der die Schweißoperation wiederholt ausgeführt wird, ein zusammengeführtes Teil (50), erhalten durch das Schweißen mit dem stationären Ring (20), gebildet wird, um eine durchgehende Bogenform aufzuweisen.

2. Verfahren zur Herstellung eines Wälzlagers nach Anspruch 1, wobei wenn, im Vorbereitungsschritt, der Seitenteil (23) des stationären Rings (20) von einem Teil des Schildes (40) überdeckt wird, der Schild mit einer Vorrichtung (60) gegen den Seitenteil gedrückt wird, und wobei der Schweißschritt durchgeführt wird, während der Schild gegen den Seitenteil gedrückt wird.

3. Verfahren zur Herstellung eines Wälzlagers nach Anspruch 2, wobei
die Vorrichtung einen Körperteil (61) umfasst, der koaxial zur mittleren Achse des stationären Rings ist, und wobei sich mehrere Vorsprünge (62) vom Körperteil radial auswärts erstrecken und in umlaufenden Abständen bereitgestellt sind, und wobei,
während die Vorsprünge den Schild gegen den Seitenteil des stationären Rings drücken, Laser zwischen den Vorsprüngen, die umlaufend aneinander angrenzend sind, ausgegeben wird.

4. Wälzlager, hergestellt mit dem Verfahren zur Herstellung nach Anspruch 1, wobei das Wälzlager Folgendes umfasst:
einen stationären Ring (20);
einen rotierenden Ring (10);
mehrere Wälzelemente (30), positioniert zwischen dem stationären Ring und dem rotierenden Ring;
einen Halter (35), der die mehreren Wälzelemente hält; und
einen Schild (40) mit einer ringförmigen Form und befestigt an einem Seitenteil (23) des stationären Rings (20), wobei ein zusammengeführter Teil (50), erhalten durch Schweißen mit dem stationären Ring, und ein nicht-geschweißter Teil (51), der nicht am stationären Ring befestigt ist, umlaufend alternierend am Schild bereitgestellt sind.

5. Wälzlager nach Anspruch 4, wobei der zusammengeführte Teil (50) in umlaufend regelmäßigen Abständen bereitgestellt ist.

6. Wälzlager nach Anspruch 4, wobei der zusammengeführte Teil (50) in umlaufend unregelmäßigen Abständen bereitgestellt ist.

7. Wälzlager nach einem der Ansprüche 4 bis 6, wobei ein Anteil des zusammengeführten Teils, der eine umlaufende Richtung belegt, in einen Bereich von 1 % bis einschließlich 50 % fällt, wobei der zusammengeführte Teil an jedem von drei oder mehr Orten in umlaufender Richtung bereitgestellt ist, und wobei der zusammengeführte Teil an jedem der drei Orte eine umlaufende Länge aufweist, die in einen Bereich von 0,5 mm bis einschließlich 5 mm fällt.

8. Wälzlager nach einem der Ansprüche 4 bis 7 wobei
der Seitenteil (23) des stationären Rings (20) mit einer umlaufenden Nut (24) zum Befestigen des Schildes versehen ist,
ein Randteil (43) des Schildes (40) einen gebogenen Teil (55) aufweist, der innerhalb eines axialen Bereichs der umlaufenden Nut (24) existiert, und
zwischen einer zylindrischen umlaufenden Oberfläche (25) der umlaufenden Nut (24) und einer umlaufenden Oberfläche (57) des Randteils eine Lücke über einen gesamten Umfang gebildet ist.

## Revendications

1. Procédé de fabrication d'un palier à roulement comprenant une bague fixe (20), une bague tournante (10), une pluralité d'éléments roulants (30) interposés entre la bague fixe et la bague tournante, et un dispositif de retenue (35) retenant la pluralité d'éléments roulants, le procédé comprenant l'étape consistant à fixer un bouclier (40) ayant une forme annulaire à la bague fixe (20), le procédé comprenant :
une étape de préparation consistant à superposer une partie du bouclier (40) sur une partie latérale (23) de la bague fixe (20) ; et
une étape de soudage consistant à souder au laser le bouclier sur la partie latérale, lors de l'étape de soudage, une tête (80) émettant le laser et la bague fixe (20) sur laquelle le bouclier est superposée, étant tournées relativement autour d'un axe central (C) de la bague fixe (20),
une opération de soudage consistant à émettre un laser sur le bouclier à souder et une opération de non-soudage consistant à ne pas émettre de laser sont alternativement effectuées de manière répétitive de sorte que, lors de l'opération de soudage, alors que la sortie de laser, qui est une onde d'impulsion, est émise de manière intermittente pendant une seconde période plus courte que la première période pendant laquelle l'opération de soudage est effectuée de manière répétitive, une pièce fusionnée (50) obtenue par le soudage avec la bague fixe (20) soit formée de manière à avoir une forme d'arc continu.

2. Procédé de fabrication d'un palier à roulement selon la revendication 1, à l'étape de préparation dans laquelle une partie du bouclier (40) est superposée à la partie latérale (23) de la bague fixe (20), le bouclier étant pressée contre la partie latérale de la bague fixe à l'aide d'un gabarit (60), et l'étape de soudage étant effectuée pendant que le bouclier est pressée contre la partie latérale.

3. Procédé de fabrication d'un palier à roulement selon la revendication 2,
le gabarit comprenant une partie de corps (61) coaxiale à l'axe central de la bague fixe, et une pluralité de saillies (62) s'étendant radialement vers l'extérieur à partir de la partie de corps et situées à des intervalles circonférentiels, et
pendant que les saillies pressent le bouclier contre la partie latérale de la bague fixe, le laser étant émis entre les saillies circonférentiellement adjacentes l'une à l'autre.

4. Palier à roulement fabriqué selon le procédé de fabrication de la revendication 1, le palier à roulement comprenant :
une bague fixe (20) ;
une bague tournante (10) ;
une pluralité d'éléments roulants (30) interposés entre la bague fixe et la bague tournante ;
un dispositif de retenue (35) retenant la pluralité d'éléments roulants ; et
un bouclier (40) ayant une forme annulaire et fixée à une partie latérale (23) de la bague fixe (20), une partie fusionnée (50) obtenue par soudage avec la bague fixe et une partie non soudée (51) non fixée à la bague fixe étant situées en alternance sur la circonférence du bouclier.

5. Palier à roulement selon la revendication 4, la partie fusionnée (50) étant située à des intervalles circonférentiels réguliers.

6. Palier à roulement selon la revendication 4, la partie fusionnée (50) étant située à des intervalles circonférentiels irréguliers.

7. Palier à roulement selon l'une quelconque des revendications 4 à 6, une proportion de la partie fusionnée occupant la direction circonférentielle étant comprise dans la plage de 1 % à 50 % inclus, la partie fusionnée étant située à chacun des trois emplacements ou plus dans la direction circonférentielle, et la partie fusionnée à chacun des trois emplacements ayant une longueur circonférentielle comprise dans la plage de 0,5 mm à 5 mm inclus.

8. Palier à roulement selon l'une quelconque des revendications 4 à 7,
la partie latérale (23) de la bague fixe (20) étant pourvue d'une rainure circonférentielle (24) pour la fixation du bouclier,
une partie de bord (43) du bouclier (40) ayant une partie courbée (55) existant dans une plage axiale de la rainure circonférentielle (24), et
entre une surface circonférentielle cylindrique (25) de la rainure circonférentielle (24) et une surface circonférentielle (57) de la partie du bord, un espace étant formé sur toute la circonférence.
